# EUROPEAN PATENT APPLICATION

(11) **EP 4 501 856 A1**
(43) Date of publication of application: **05.02.2025**
(21) Application number: 22933670.6
(22) Date of filing: 20.12.2022
(51) Int. Cl.: C01G 23/02, C01F 7/54, H01B 1/06, H01M 10/0562

(54) **HALIDE MATERIAL PRODUCTION METHOD AND HALIDE MATERIAL**

(30) Priority: 24.03.2022 JP 2022047952
(71) Applicant: Panasonic Intellectual Property Management Co., Ltd., Osaka-shi, Osaka 540-6207 (JP)
(72) Inventor: KOGA, Eiichi, Kadoma-shi, Osaka 571-0057 (JP)
(74) Representative: Grünecker Patent- und Rechtsanwälte PartG mbB
(86) International application number: PCT/JP2022/046923
(87) International publication number: WO 2023/181542

(57) **Abstract**

A halide material producing method according to the present disclosure includes (A) subjecting a material mixture containing a first compound containing Li, M1, and X1 and a second compound containing M2 to mechanochemical treatment, wherein each of M1 and M2 represents one type of element selected from a metal element and a metalloid element, and X1 represents at least one selected from the group consisting of F, Cl, Br, and I.

## Description

### Technical Field

The present disclosure relates to a halide material producing method and a halide material.

### Background Art

PTL 1 discloses a halide solid electrolyte denoted by a formula: Li_{6-(4-x)b}(Ti₁₋ₓMₓ)_{b}F₆ (where 0 < x < 1 and 0 < b ≤ 1.5).

PTL 2 discloses a halide producing method by using M₂O₃ (where M represents at least one type of element selected from the group consisting of Y, lanthanoid, and Sc) as a raw material.

### Citation List

### Patent Literature

PTL 1: International Publication No. 2021/186809
PTL 2: International Publication No. 2020/136956

### Summary of Invention

### Technical Problem

In the related art, a producing method for synthesizing a halide having high ionic conductivity in a short time has been desired. It is an object of the present disclosure is to provide a producing method for producing a halide material having high ionic conductivity in a short time.

### Solution to Problem

A halide material producing method according to an embodiment of the present disclosure includes (A) subjecting a material mixture containing a first compound containing Li, M1, and X1 and a second compound containing M2 to mechanochemical treatment, wherein each of M1 and M2 represents one type of element selected from a metal element and a metalloid element, and X1 represents at least one selected from the group consisting of F, Cl, Br, and I.

### Advantageous Effects of Invention

According to the present disclosure, a producing method for producing a halide material having high ionic conductivity in a short time can be provided.

### Brief Description of Drawings

[Fig. 1] Fig. 1 is a flow chart illustrating a first example of the producing method according to the present disclosure.
[Fig. 2] Fig. 2 is a flow chart illustrating a second example of the producing method according to the present disclosure.
[Fig. 3] Fig. 3 is a graph illustrating an X-ray diffraction pattern of Sample 1 after a preparation step and before a mechanochemical step.
[Fig. 4] Fig. 4 is a graph illustrating an X-ray diffraction pattern of Sample 1-4 after a mechanochemical step.
[Fig. 5] Fig. 5 is a graph illustrating an X-ray diffraction pattern of Sample 5 after a preparation step.
[Fig. 6] Fig. 6 is a graph illustrating an X-ray diffraction pattern of Sample 5-2 after a mechanochemical step.

### Description of Embodiments

### (Outline of aspect according to the present disclosure)

A producing method according to a first aspect of the present disclosure includes
(A) subjecting a material mixture containing a first compound containing Li, M1, and X1 and a second compound containing M2 to mechanochemical treatment,
   wherein each of M1 and M2 represents one type of element selected from a metal element and a metalloid element, and
   X1 represents at least one selected from the group consisting of F, Cl, Br, and I.

The producing method according to the first aspect can produce a halide material having high ionic conductivity in a short time.

In a second aspect of the present disclosure, for example, regarding the producing method according to the first aspect, the first compound may be a particle.

According to the above-described configuration, the ionic conductivity of the halide material can be further improved.

In a third aspect of the present disclosure, for example, regarding the producing method according to the first aspect or the second aspect, the material mixture may be subjected to the mechanochemical treatment by using a ball mill in (A) above.

According to the above-described configuration, a halide material having higher ionic conductivity can be produced in a shorter time.

In a fourth aspect of the present disclosure, for example, regarding the producing method according to any one of the first aspect to the third aspect, the first compound may have a crystal phase.

According to the above-described configuration, the impact resistance of the halide material can be improved.

In a fifth aspect of the present disclosure, for example, regarding the producing method according to any one of the first aspect to the fourth aspect, M1 may represent Al or Ti.

According to the above-described configuration, the ionic conductivity of the halide material can be further improved.

In a sixth aspect of the present disclosure, for example, regarding the producing method according to any one of the first aspect to the fifth aspect, X1 may contain F.

According to the above-described configuration, the environmental resistance of the halide material can be improved.

In a seventh aspect of the present disclosure, for example, regarding the producing method according to any one of the first aspect to the sixth aspect, the first compound may be denoted by a formula: Li_{6-ab}M1_{b}X1₆ (where a represents a valence of M1, and 0 < b ≤ 1.5 is satisfied).

According to the above-described configuration, the ionic conductivity of the halide material can be further improved.

In an eighth aspect of the present disclosure, for example, regarding the producing method according to any one of the first aspect to the seventh aspect, M2 may represent Al or Ti.

According to the above-described configuration, the ionic conductivity of the halide material can be further improved.

In a ninth aspect of the present disclosure, for example, regarding the producing method according to any one of the first aspect to the eighth aspect, the second compound may further contain X2, where X2 may represent at least one selected from the group consisting of F, Cl, Br, and I.

According to the above-described configuration, the ionic conductivity of the halide material can be further improved.

In a tenth aspect of the present disclosure, for example, the producing method according to any one of the first aspect to the ninth aspect may further include (B) synthesizing the first compound, wherein (B) above may be performed before (A) above.

According to the above-described configuration, a halide material having higher ionic conductivity can be produced in a shorter time.

In an eleventh aspect of the present disclosure, for example, regarding the producing method according to the tenth aspect, the first compound may be synthesized by heat-treating a raw material mixture in (B) above.

According to the above-described configuration, a halide material having higher ionic conductivity can be produced in a shorter time.

In a twelfth aspect of the present disclosure, for example, regarding the producing method according to the tenth aspect, the first compound may be synthesized by subjecting a raw material to the mechanochemical treatment in (B) above.

According to the above-described configuration, production of various halide materials can be realized.

A halide material according to the thirteenth aspect of the present disclosure contains
Compound A composed of Li, M1, M2, and X,
wherein each of M1 and M2 represents one type of element selected from a metal element and a metalloid element,
X represents at least one selected from the group consisting of F, Cl, Br, and I, and
Compound A above has an amorphous phase.

The halide material according to the thirteenth aspect can realize high ionic conductivity.

In a fourteenth aspect of the present disclosure, for example, the halide material according to the thirteenth aspect may substantially contain neither LiX nor M1Xₘ nor M2Xₙ, where m represents a valence of M1, and n represents a valence of M2.

According to the above-described configuration, the ionic conductivity can be further improved.

In a fifteenth aspect of the present disclosure, for example, the halide material according to the thirteenth aspect may further contain Compound B containing a compound composed of Li, M1, and X.

According to the above-described configuration, the ionic conductivity can be further improved.

In a sixteenth aspect of the present disclosure, for example, regarding the halide material according to the fifteenth aspect, Compound B above may contain a first component having a first melting point and a second component having a second melting point different from the first melting point.

According to the above-described configuration, the reliability of a battery by using the halide material can be improved.

In a seventeenth aspect of the present disclosure, for example, regarding the halide material according to the sixteenth aspect, the first melting point may be higher than the second melting point, and Compound B above may contain the first component as a primary component.

According to the above-described configuration, the reliability of a battery by using the halide material can be improved.

In an eighteenth aspect of the present disclosure, for example, regarding the halide material according to the sixteenth aspect or the seventeenth aspect, ionic conductivity of the first component may be higher than ionic conductivity of the second component, and Compound B above may contain the first component as a primary component.

According to the above-described configuration, a halide material having high ionic conductivity and having excellent heat resistance and environmental resistance can be realized.

Embodiments according to the present disclosure will be described below.

### (First embodiment)

As described in the section "Background Art", PTL 1 discloses a halide solid electrolyte denoted by a formula: Li_{6-(4-x)b}(Ti₁₋ₓMₓ)_{b}F₆ (where 0 < x < 1 and 0 < b ≤ 1.5). The halide solid electrolyte is synthesized by using a fluoride of a single cation as a raw material and subjecting a mixture thereof to mechanochemical milling by using a planetary ball mill.

PTL 2 discloses a halide producing method by using M₂O₃, NH₄X, and LiZ (where M represents at least one type of element selected from the group consisting of Y, lanthanoid, and Sc, and each of X and Z represents at least one type of element selected from the group consisting of Cl, Br, I, and F) as raw materials. The producing method is a technique to heat-treat a raw material mixture in an inert atmosphere. After the heat treatment, the mechanochemical treatment in the producing method according to the present disclosure is not performed.

Since the method in the related art described in PTL 1 requires long-time and high-energy milling treatment, the present inventor investigated a method capable of producing a halide material in a short time. Further, regarding a halide produced by the above-described method in the related art, the present inventor also noted that the single cationic halide serving as a raw material does not completely react and remains. Consequently, the present inventor realized the producing method according to a first embodiment below.

A halide material producing method according to the first embodiment will be described below.

The halide material producing method according to the first embodiment includes
(A) subjecting a material mixture containing a first compound containing Li, M1, and X1 and a second compound containing M2 to mechanochemical treatment. Each of M1 and M2 represents one type of element selected from a metal element and a metalloid element, and X1 represents at least one selected from the group consisting of F, Cl, Br, and I.

According to the producing method of the first embodiment, a halide material containing Li, M1, M2, and X and having high ionic conductivity can be produced in a short time.

In the present disclosure, "high ionic conductivity" means relatively high ionic conductivity when halide materials formed from the same element are compared with each other. That is, according to the producing method of the first embodiment, regardless of elements selected as M1 and M2, a halide material having higher ionic conductivity among halide materials having the same constituent elements is obtained in a short time. The halide material obtained by the producing method according to the first embodiment has practical ionic conductivity with respect to use for, for example, a battery. The practical ionic conductivity is, for example, 1 µS/cm or more in the vicinity of room temperature.

Further, according to the producing method of the first embodiment, a halide material having an amorphous phase can be produced. Herein, in the present disclosure, "having an amorphous phase" includes having an amorphous structure and having a distorted crystal structure.

When a halide material is produced through mechanochemical treatment by using, as a raw material, a complex cationic halide such as the first compound containing Li, a cation other than Li, and a halogen element, a halide containing Li, a cation other than Li, and another cation can be efficiently obtained. The reason for this is that the composition component of the first compound serving as the raw material is close to a target halide and that the composition is suppressed from changing due to synthesis. Further, the above-described halide containing the other cation, the halide being obtained using the first compound as the raw material, can be made into a halide having improved ionic conductivity and a flexible property (plasticity) by distorting the crystal structure (atomic arrangement) or including an amorphous structure. Regarding the halide having a flexible property, in a green compact texture, contact points between particles are increased due to plastic deformation so as to improve the ionic conductivity. Such an action due to provision of the flexible property is realized with respect to a halide rather than an oxide or a sulfide containing oxygen or sulfur as an anion. The reason for this is that the electronegativity of a halogen element is greater than or equal to about double the electronegativity of oxygen or sulfur. The action is particularly effective with respect to a halide containing, of halogen elements, F or Cl having high electronegativity.

When a halide material is produced through mechanochemical treatment by using a complex cationic halide such as the first compound as a raw material, a halide can be provided with the above-described flexible property. The reason for this is that the composition of the resulting halide is suppressed from changing compared with when only a single cationic halide is used as a raw material, a homogenous halide is thereby obtained at an early stage, and the halide is sufficiently converted to an amorphous material through mechanochemical treatment. Therefore, performing mechanochemical treatment by using the first compound as the raw material enables a halide material containing a halide having an amorphous phase to be obtained in a short time. Consequently, according to the producing method of the first embodiment, a halide material having improved ionic conductivity can be obtained in a short time. In addition, since particles constituting the halide material can be strongly adhered to each other in a large area due to plastic deformation, structural defects such as fine cracks and gaps in the green compact texture are decreased. As a result, the reliability of the ionic conductivity against external stress such as a thermal cycle is improved.

Further, according to the producing method of the present disclosure, a single cationic halide in the resulting halide material is suppressed from remaining. In a compound composed of Li and a halogen element (that is, single cationic halide), the Li ion and the halogen element may form a strong bond since the halogen element has high electronegativity. As a result, lithium ion conductivity is decreased. Such a single cationic halide being suppressed from remaining or being removed enables the ionic conductivity to be improved.

In the present disclosure, "complex cationic halide" means a compound containing Li, a cation other than Li, and a halogen element. "Single cationic halide" means a compound composed of one type of cation and a halogen element.

Hereafter (A) above is referred to as "mechanochemical step".

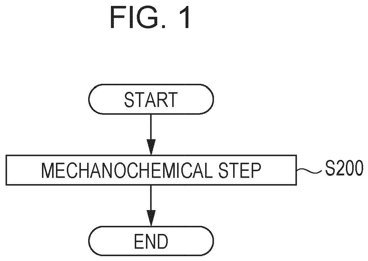

Fig. 1 is a flow chart illustrating a first example of the producing method according to the present disclosure.

As illustrated in Fig. 1, the producing method according to the first embodiment includes Mechanochemical step S200. In Mechanochemical step S200, a material mixture is subjected to mechanochemical treatment. The material mixture contains a first compound containing Li, M1, and X1 and a second compound containing M2.

According to the above-described configuration, a halide material having improved ionic conductivity can be produced in a short time.

The producing method according to the first embodiment may further include (B) synthesizing the first compound.

Hereafter (B) above is referred to as "preparation step".

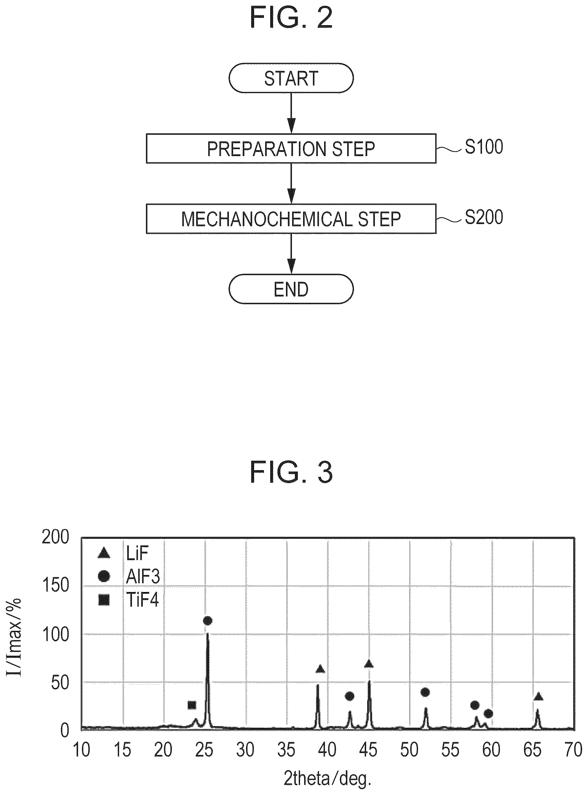

Fig. 2 is a flow chart illustrating a second example of the producing method according to the present disclosure.

As illustrated in Fig. 2, the producing method according to the first embodiment may further include Preparation step S100. Preparation step S100 is performed before Mechanochemical step S200.

The first embodiment will be described below in detail.

### (First compound)

The first compound contains Li, M1, and X1. The first compound may be composed of Li, M1, and X1.

The first compound may be a particle. Consequently, a granular halide material can be produced, and a crystal structure of the particle surface being distorted or an amorphous structure being included in the particle (mainly, wide bonding surface of the particle surface layer) enables a texture having improved ionic conductivity and flexibility to be formed. In addition, the particle surface layer having high ionic conductivity and flexibility leads to a network (net-like) texture provided with high ionic conductivity and interparticle bondability. Therefore, according to the producing method of the first embodiment, a halide material having high ionic conductivity and excellent bonding reliability is obtained.

The first compound may have a crystal phase. The first compound may have a plurality of crystal phases. The first compound may be crystalline. Consequently, by the producing method according to the first embodiment, a granular halide material in which a crystalline compound having ionic conductivity is disposed in a core region in the particle, and a region having higher ionic conductivity and more flexibility than the core region and having disrupted crystallinity is included on the surface side can be obtained. Due to such a particle aggregate (green compact texture or the like), a halide material having high ionic conductivity and excellent mechanical reliability can be realized. In this regard, since the core region and the surface-side region of the particle are derived from the same chemical composition and crystal phase, problems caused by a difference in thermal expansion are decreased, and excellent bondability is exhibited in the particle and between particles. Therefore, the resulting halide material also has excellent impact resistance (for example, resistance to stress and thermal stress).

M1 may represent Al or Ti. Consequently, the halide obtained due to a reaction during Mechanochemical step S200 has high ionic conductivity.

X1 may include F. A complex cationic halide containing F tends to have characteristics exhibiting excellent stability in air. Consequently, higher environmental resistance can be realized compared with a sulfide and the like which are weak against moisture. Therefore, the characteristics can be suppressed from deteriorating due to moisture during production. In addition, regarding control of the production environment, a high degree of dew point control, such as an argon atmosphere, is unnecessary so that productivity is excellent and an industrial ripple effect is large.

### X1 may represent F.

The first compound may be a material denoted by a formula: Li_{6-ab}M1_{b}X1₆ (where a represents a valence of M1, and 0 < b ≤ 1.5 is satisfied).

When a material mixture contains a plurality of compounds that may correspond to the first compound, a compound the content of which is largest is taken as the first compound. The compound the content of which is largest means a compound having the most intense peak on an X-ray diffraction pattern obtained by X-ray diffraction measurement.

### (Second compound)

The second compound contains M2.

M2 may represent Al or Ti.

M2 may include an element different from M1. When M1 represents Al, M2 may represent Ti. When M1 represents Ti, M2 may represent Al.

The second compound may further contain X2. Herein, X2 represents at least one selected from the group consisting of F, Cl, Br, and I. That is, the second compound may contain M2 and X2.

The second compound is a compound composed of, for example, only M2 and a halogen element.

The second compound may be a compound composed of, for example, only Li, M2, and a halogen element. In such an instance, the second compound may be a material denoted by a formula: Li_{6-cd}M2_{d}X2₆ (where c represents a valence of M2, and 0 < d ≤ 1.5 is satisfied).

### X2 may include F. X2 may represent F.

X2 may include the same element as the element included in X1. X1 and X2 may include F. X1 and X2 may represent F.

### (Preparation step S100)

In Preparation step S100, the first compound is synthesized.

In Preparation step S100, for example, a plurality of single cationic halides are prepared as raw materials. A mixture thereof may be prepared as the raw material. In the mixture, a plurality of raw materials may be homogeneously mixed.

The raw material for the first compound is prepared so that the first compound has a predetermined compositional ratio.

The raw materials for the first compound are, for example, LiZ1 and a compound composed of M1 and Z2. Herein, each of Z1 and Z2 represents at least one selected from the group consisting of F, Cl, Br, and I. Specific examples of the raw material for the first compound are LiF and AlF₃ or LiF and TiF₄.

The raw materials for the first compound may be a precursor of LiZ 1 and a precursor of a compound composed of M1 and Z2.

The raw material for the first compound may be a powder. The raw material for the first compound may have an average particle diameter of, for example, greater than or equal to 0.5 µm and less than or equal to 10 µm.

The raw material may be prepared in air having a humidity of less than 60%. When the humidity in air is less than 60%, since the surface of the raw material can be suppressed from deliquescing, the precision in weighing can be suppressed from deteriorating, or the composition can be suppressed from changing.

A crystalline first compound may be obtained by subjecting the raw material mixture to a solid-phase reaction.

The raw material mixture may be, for example, heat-treated. That is, the first compound may be synthesized by heat-treating the raw material mixture. Consequently, since wide solid-phase reaction conditions, such as temperature and atmosphere control, can be applied, a complex cationic halide (that is, the first compound) having excellent ionic conductivity and environmental resistance can be synthesized by a process with excellent mass productivity.

The raw material mixture may be subjected to, for example, mechanochemical treatment. That is, the first compound may be synthesized by subjecting the raw material to the mechanochemical treatment. The mechanochemical treatment is treatment to cause a reaction resulting from applying mechanical impact such as an impact by a pulverization process and, for example, treatment to mix and pulverize a material to be treated while mechanical energy is applied by an impact pulverizer.

A ball mill may be used for the mechanochemical treatment. That is, the first compound may be synthesized by reacting the raw material by using a ball mill. Consequently, a complex cationic halide which is difficult to be synthesized through a solid-phase reaction by heat treatment can be synthesized. Regarding the mechanochemical treatment, a planetary ball mill or a common pot mill may be used.

Preparation step S 100 being included enables a single cationic halide having low conductivity in the halide material obtained after Mechanochemical step S200 to be decreased to less than or equal to the detection limit of the X-ray diffraction measurement or to be removed. In this regard, the conductivity of the single cationic halide is, for example, less than or equal to 1 × 10⁻⁹ S/cm at room temperature.

The single cationic halide serving as the raw material for the first compound may be decreased to less than or equal to the detection limit of the X-ray diffraction measurement or removed by the solid-phase reaction in Preparation step S 100. Consequently, the single cationic halide in the halide material obtained after Mechanochemical step S200 can be further decreased or removed.

The first compound synthesized in Preparation step S 100 is, for example, a melt, a sintered body, a powder, or a block-like mass in which powder is adhered and solidified.

When the first compound is synthesized by heat treatment, for example, a mixture in which the raw materials for the first compound are homogeneously mixed is placed in a heat-resistant aluminum container (that is, sagger), and an alumina lid is placed thereon so as to perform sealing. This is heat-treated by using a heat treatment furnace in an inert gas atmosphere, such as argon or nitrogen. To suppress the component from vaporizing due to heat treatment, it is favorable that the sagger and the lid having high sealability be used. For example, the heat-resistant aluminum container having a large thickness (for example, thickness of 10 mm) is used, where each of the contact surface of the lid and sagger is subjected to mirror polish treatment. In this regard, when the sagger is sealed and heat treatment is performed, a mass decrease rate can be decreased. Consequently, when the sagger is sealed and heat treatment is performed, a predetermined composition is readily aimed in spite of presence of a vaporizable component.

For example, a mechanism in which nitrogen flows into a heat treatment furnace during a heat treatment process and, when a reaction gas is generated, the reaction gas can be discharged may be disposed. The reaction gas contains, for example, moisture, chlorine, ammonium, and hydrogen chloride. The inert gas being introduced into the heat treatment furnace and being discharged enables unnecessary reaction gas components and the like to be prevented from remaining in the heat treatment furnace, that is, in the synthesized first compound. Consequently, the purity of the first compound can be increased.

Regarding introduction of the inert gas into the heat treatment furnace, it is favorable that the inert gas not directly hit the sagger storing the raw material. For example, a plate larger than the gas inlet may be placed between the gas inlet and the sagger. It is sufficient that the thickness of the plate be such a thickness at which the plate is not impaired due to a gas stream or handling. For example, a plate such as an aluminum plate may be leaned such that shielding is performed partly. Accordingly, since shielding is performed between the gas inlet and the sagger, the gas goes around the shield plate and thereafter comes into contact with the sagger. The gas being made to go around the shield plate and thereafter being made to come into contact with the sagger decreases a problem that the temperature distribution in the sagger is increased due to a temperature decrease of a section directly hit by the gas from the gas inlet. Consequently, a distribution of the progress state of the first compound synthesis reaction in the sagger can be suppressed from becoming nonuniform (varying). Therefore, a homogeneous first compound can be synthesized.

It is favorable that the gas inlet be disposed on the bottom side of the heat treatment furnace, and an exhaust gas outlet be disposed on the upper side (for example, on the ceiling side or on the upper side of a side wall). Consequently, since the reaction gas can be smoothly discharged outside the furnace by being carried on the upward stream of convection in the heat treatment furnace, unnecessary remaining components can be decreased.

The introduction gas may be heated and thereafter introduced into the heat treatment furnace. Consequently, the temperature distribution in the sagger can be suppressed from becoming nonuniform. As a result, since a reaction distribution in the sagger can be uniformized, a more homogeneous first compound can be obtained. Therefore, a raw material having low electrical conductivity is effectively decreased or removed.

The heat treatment temperature may be higher than or equal to 300°C and lower than or equal to 900°C and may be higher than or equal to 550°C and lower than or equal to 800°C. When heat treatment is performed at a temperature higher than or equal to the melting point of the first compound, since a molten state has higher fluidity than a solid, diffusion of the composition is facilitated, and a homogenous block body can be obtained.

The block body of the first compound may be roughly pulverized by using a mortar, a pestle, and the like. Pulverization may be performed to the extent at which a sense of touch does not feel a coarse particle. For example, the block body may be pulverized so as to have an average particle diameter of about 10 µm.

The heat treatment time may be greater than or equal to 0.5 hours and 40 hours or may be greater than or equal to 0.5 hours and less than or equal to 20 hours.

The heat treatment conditions (for example, the heat treatment temperature and the heat treatment time) required for the synthesis may be determined in consideration of the synthesis state of the first compound and handling including a post-process. For example, determination may be performed in consideration of adhesion to the sagger.

A known atmosphere heat treatment furnace can be used as the heat treatment furnace.

To remove air and moisture between powder particles deep in the sagger so as to completely replace with an inert gas, the inert gas may be made to flow after vacuum replacement. Consequently, the raw material can be suppressed from reacting with moisture and the like in air. Vacuum replacement may be repeatedly performed.

To remove moisture adsorbed to the sagger or inside the furnace, before heat treatment of the raw material mixture, treatment under the same condition as that of the heat treatment (the atmosphere and the heat treatment profile) may be performed in advance. Consequently, variations in the reaction of the raw material sensitive to moisture can be decreased.

The temperature distribution in the sagger may be within a temperature distribution width of a commonly used heat treatment furnace, for example, 30°C. In this regard, the temperature distribution in the sagger is a difference between the highest temperature and the lowest temperature in the sagger.

When the heat treatment is performed at a temperature higher than or equal to the melting point of the first compound, the sagger to be used may be an unbreathable, dense, and heat-resistant aluminum container. For example, the grade may be higher than or equal to commonly used SSA-H (purity of 95%, density of 3.9 g/cm³, and water absorption of 0%). Consequently, the first compound can be synthesized and removed without a molten component permeating the wall surface of the sagger. In this regard, since the sagger of such a grade has high thermal conduction of about 20 W/m-k, the temperature distribution in the sagger can be suppressed from becoming nonuniform, and the sagger is suitable for a uniform reaction. In addition, since the first compound that does not readily react with the sagger and that is synthesized in a state of molten block body can be readily peeled off the sagger, the block body of the first compound can be recovered with decreased loss.

The material of the sagger is not limited to alumina. It is sufficient that the material of the sagger be a refractory material having thermal conductivity greater than or equal to the thermal conductivity of alumina and being difficult to react with the first compound. As described above, using a high-thermal-conductivity refractory for the sagger enables the first compound to be synthesized while the temperature distribution in the sagger is suppressed from becoming nonuniform.

Other examples of the material of the sagger include alumina of SSA-S, SSA-T, or SSA-995 grade and high-thermal-conductivity refractories, such as SiC having a thermal conductivity of about 17 W/m·k.

The sagger is not limited to being used in the heat treatment. For example, a powder may be sprayed and heat-treated as in a rotary kiln or spray-drying. Alternatively, heat treatment may be performed at high pressure at which vaporization can be suppressed.

The first compound having a plurality of crystal phases may be synthesized by heat treatment. The first compound has, for example, a crystal phase serving as a primary component and having relatively high ionic conductivity and a crystal phase serving as a secondary component and having a lower melting point than the primary component phase. The melting point may change in accordance with the composition or the crystal structure. According to the above-described configuration, for example, in such an instance in which a halide that is a halide obtained by the producing method of the first embodiment and that contains the first compound is used for a battery, when a battery generates heat, the secondary component crystal phase having a low melting point preferentially deteriorates, and damage to the primary component crystal phase is decreased. Therefore, the reliability of the battery can be improved.

As described above, the first compound may be synthesized by a reaction due to mechanochemical treatment.

Regarding the mechanochemical treatment, ball milling may be performed using a common pot mill.

The raw materials for the first compound and a pulverization medium, such as zirconia balls, are placed together in a planetary ball mill or a pot mill, and pulverization treatment is performed. A reaction between the raw materials progresses due to repetition of an impact from the pulverization medium so that the first compound is synthesized.

The reaction due to the mechanochemical treatment is effective for a material that is difficult to be synthesized by heat treatment. In this regard, since the synthesis is performed in a closed space, vaporization of the composition does not occur, all the raw materials placed in the container can be recovered, and therefore, a compound having an intended composition is readily obtained.

Known partially stabilized zirconia may be used as the pulverization medium. The partially stabilized zirconia has excellent abrasion resistance. Consequently, an impurity is suppressed from being mixed due to abrasion.

For example, 10% to 60% of zirconia balls relative to the volume of a mill container are placed in the mill container, sealing by an inert gas (nitrogen, argon, or the like) is performed, and agitation is performed by rotating the mill container.

A compound having high stability in air may be treated in air. For example, a compound containing Li, Al, Ti, and F as primary components has high stability in air. Accordingly, using a compound having high stability in air enables industrial mass synthesis of the first compound to be realized.

The shape of the pulverization medium may be a sphere having a diameter of greater than or equal to 1 mm and less than or equal to 30 mm. The pulverization medium is, for example, a zirconia ball.

Grindability (for example, synthesis rate) is appropriately selected. To strengthen the grindability, the inner wall of the ball mill may be formed of a hard material such as zirconia or alumina. The shape of the inner wall of the ball mill may be a circular cylinder or a polygonal tube-like shape, such as a rectangular tube. When the shape of the inner wall of the ball mill is a polygonal tube-like shape, the grindability is strengthened, and the synthesis rate is accelerated. For example, using a hexagonal tube-type mill container enables the synthesis time to be decreased to 1/3 to 1/2 of the synthesis time when a circular-cylinder-type mill container is used.

The shape of the inner wall of the ball mill may have unevenness. Consequently, the grindability can be further improved.

When the first compound is synthesized by the reaction due to the mechanochemical treatment, the synthesis time may be, for example, greater than or equal to 1 hour and less than or equal to 80 hours or may be greater than or equal to 10 hours and less than or equal to 20 hours.

The synthesis rate may be increased by externally heating the ball mill so as to activate the reaction. Consequently, the synthesis can be performed in a short time. That is, the mass productivity can be improved. In this regard, when the first compound is formed of a material having a property that the crystallinity is disrupted or conversion to an amorphous material is promoted due to mechanochemical milling, such a method is unsuitable for synthesis in a state of favorable crystallinity. Therefore, in the above-described instance, a synthesis method such as heat treatment in which an impact action is not readily applied to a powder is suitable for Preparation step S100.

In Preparation step S 100, the heat treatment of the raw material mixture may be performed twice. For example, the reaction conditions for the two times of heat treatment differ from each other. Consequently, the solid phase reaction can progress more uniformly. Therefore, since the single cationic halide serving as the raw material can be suppressed from mixing, production of a halide having high electrical conductivity and a reduction in the treatment time of Mechanochemical step S200 can be realized.

### (Mechanochemical step S200)

In Mechanochemical step S200, the material mixture is subjected to mechanochemical treatment. The material mixture contains the first compound and the second compound.

In Mechanochemical step S200, a distorted crystal or amorphousness is introduced into the first compound that is a complex cationic halide by the mechanochemical treatment. Since the condition for the mechanochemical treatment is readily adjusted, appropriate treatment can be performed in accordance with the amount of necessary halide material, the scale of the production equipment, or the like.

The method for performing mechanochemical treatment may be akin to the method described in Preparation step S100.

In Mechanochemical step S200, the material mixture may be subjected to the mechanochemical treatment by using a ball mill. Consequently, the crystal texture of the first compound surface can be treated in a short time by using a method excellent in mass productivity. In this regard, a powder can be used as the material mixture.

When the producing method according to the first embodiment includes Preparation step S 100, a mechanochemical treatment apparatus, a pulverization medium, and the like used in Mechanochemical step S200 may be the same as those used in Preparation step S100.

In Mechanochemical step S200, a halide is synthesized, and the crystallinity is lowered. That is, the halide is converted to an amorphous material in Mechanochemical step S200. In particular, the crystallinity of the surface layer region of the halide that is a powder or a particle is lowered. Regarding the condition for the mechanochemical treatment in Mechanochemical step S200, the treatment time may be small and the pulverization and collision energy may be low compared with the mechanochemical treatment to synthesize the first compound from the single cationic halide in Preparation step S100.

The flexibility of the powder particle can be increased with extending the mechanochemical treatment in Mechanochemical step S200. That is, the crystallinity can be lowered. In this regard, the flexibility of the powder particle can be relatively evaluated based on the micro-Vickers evaluation relative to every particle or a green compact texture. In addition, a change in the flexibility of the powder particle can also be ascertained from a change in the yield of the mechanochemical treatment. The reason for this is that since the crystallinity changes, that is, the flexibility of the powder particle increases, with extending the ball mill treatment time and the amount of the powder attached to the zirconia ball increases correspondingly, the yield is decreased in accordance with the amount of the powder attached to wall surface and the zirconia ball.

A common ball mill including a pot mill which is commonly used in a mass production step may be used for the mechanochemical treatment. Various volumes, such as a volume of several tens of milliliters to a large volume of several hundreds of liters, of pots can be used, and several grams to several hundreds of kilograms of reaction material can be treated.

A planetary ball mill having high impact is frequently used for the mechanochemical treatment. However, when a large container is used, a problem relating to internal heat generation occurs due to a high impact or a frictional action. Since the pot mill has a weaker mechanochemical action than the planetary ball mill, in general, a predetermined reaction is not limited to being obtained, or a required treatment time may be greater than or equal to several times to about ten times that of the planetary ball mill. For such a reason, in the related art, it has been difficult to perform mass synthesis with high quality in a short time by the mechanochemical treatment. According to the producing method of the first embodiment, a halide material having high electrical conductivity is obtained at a mechanochemical action level of the ball mill used in common ceramics synthesis.

Specifically, regarding the mechanochemical treatment in Mechanochemical step S200, the amount of the pulverization medium may be decreased compared with the mechanochemical treatment in Preparation step S 100. In addition, the amount of the powder introduced may be increased.

The mechanochemical treatment time may be, for example, greater than or equal to 1 hour and less than or equal to 30 hours or may be greater than or equal to 3 hours and less than or equal to 12 hours. When the mechanochemical treatment is performed using the ball mill, the rotational speed may be greater than or equal to 60 rpm and less than or equal to 80 rpm.

Therefore, regarding Mechanochemical step S200, the equipment is simple, and excellent productivity is exhibited compared with common mechanochemical synthesis.

In Mechanochemical step S200, for example, a zirconia container is used, greater than or equal to 10% and less than or equal to 60% of zirconia balls relative to the volume of the container are introduced, and the material mixture is subjected to mechanochemical milling.

The size of the zirconia ball may be optional. Typically, a zirconia ball having a diameter of greater than or equal to 1 mm and less than or equal to 30 mm is used. But the diameter may be less than this or may be greater than this.

To prevent adhesion to the zirconia ball or the inner wall of the zirconia container from occurring, an appropriate amount of adhesive such as ethanol may be added. The adhesive that does not affect the characteristics of the resulting halide is used.

The producing method according to the first embodiment may further include heat-treating the first compound before Mechanochemical step S200. Consequently, the solid phase reaction can progress more uniformly. As a result, since the raw material of the first compound, that is, the single cationic halide, can be suppressed from mixing, production of a halide material having higher electrical conductivity and a reduction in the treatment time of Preparation step S 100 can be realized.

When the first compound is synthesized by heat treatment in Preparation step S 100, particles in the resulting heat-treated material are in a state of necking with each other due to the solid phase reaction between particles in contact with each other. Herein, the particle diameter suitable for use is, for example, 1 µm to 10 µm. In this regard, a crystalline state in which the atomic arrangement is well-ordered and an anion and a Li ion form a strong bond is a low electrical conductivity state. In addition, on the particle surface of the heat-treated material after Preparation step S 100, a flexible region having disrupted crystallinity, that is, a region having deformability, is not formed. Then, the mechanochemical treatment being performed in Mechanochemical step S200 forms a texture structure having a flexible and distorted crystal structure so as to increase contact points between particles in the green compact texture. Consequently, although there is a problem that a bonding surface at a particle interface tends to peel due to stress or a thermal cycle, since interparticle bondability increases, the ionic conductivity of the halide material can be improved. Therefore, since the producing method according to the first embodiment includes Mechanochemical step S200 having a mechanochemical action such as pulverization or causing a disruption to the crystallinity, the producing method is suitable for producing the halide material used as, for example, a solid electrolyte.

The halide material obtained by the producing method according to the first embodiment has favorable lithium ion conductivity and, therefore, may be usable as a solid electrolyte.

### (Second embodiment)

A halide material producing method according to the second embodiment will be described below.

The halide material according to the second embodiment contains Compound A composed of Li, M1, M2, and X. Herein, each of M1 and M2 represents one type of element selected from a metal element and a metalloid element, and X represents at least one selected from the group consisting of F, Cl, Br, and I. Compound A has an amorphous phase.

The halide material according to the second embodiment can have high lithium ion conductivity since Compound A has an amorphous phase.

The halide material according to the second embodiment is obtained by, for example, the producing method according to the first embodiment.

It can be ascertained on the basis of an X-ray diffraction pattern obtained by X-ray diffraction measurement that the halide material has an amorphous phase. The X-ray diffraction pattern may be measured by the θ-2θ method by using Cu-Kα rays (wavelength of 1.5405 Å and 1.5444 Å) as the X-ray source.

A region having a distorted crystal structure, that is, a region having disrupted crystallinity, can be observed as an image composed of a highly regular region and a disrupted region by using a transmission electron microscope (TEM).

The halide material according to the second embodiment may be composed of only Li, M1, M2, and X.

The halide material may have greater than or equal to 2 types of crystal structures. The greater than or equal to 2 types of distorted crystal structures may differ from each other in the composition or may differ from each other in the atomic arrangement. Consequently, the halide material can have a texture mixture in which flexibility changes. Then, the breakdown limits of the stress resistance and the thermal impact resistance at the bonding interface between particles change on an amorphous texture basis, and, therefore, the limit levels are dispersed in the green compact texture. As a result, when strong stress or external thermal stress act on the halide material, rapid breakdown or damage can be prevented. Therefore, when the halide material according to the second embodiment is used for a device such as a battery, a problem that a device suddenly stops operating is decreased.

The halide material according to the second embodiment may substantially contain neither LiX nor M1Xₘ nor M2Xₙ. Herein, m represents a valence of M1, and n represents a valence of M2.

"Substantially contain neither LiX nor M1Xₘ nor M2Xₙ" means that mixing of a small amount of LiX, M1Xₘ, and M2Xₙ is allowed. In such an instance, LiX, M1Xₘ, and M2Xₙ mixed in the halide material are less than the detection limit of the X-ray diffraction measurement. The halide material according to the second embodiment may contain neither LiX nor M1Xₘ nor M2Xₙ. According to the above-described configuration, the ionic conductivity can be further improved.

The halide material according to the second embodiment may contain Compound A composed of Li, M1, M2, and X.

The halide material according to the second embodiment may further contain Compound B composed of Li, M1, and X. Compound B may have an amorphous phase. Consequently, a component having excellent ionic conductivity and stability in air can be formed on the particle surface layer or between particles of the halide material. According to the above-described configuration, the halide material according to the second embodiment has high ionic conductivity and excellent mechanical reliability.

Compound B may further contain a compound composed of Li, M2, and X.

Compound B may contain a first component having a first melting point and a second component having a second melting point different from the first melting point. Consequently, different melting points are distributed in the halide material. As a result, for example, when the halide material according to the second embodiment is used for a battery, thermal runaway at a time of irregular heat generation or current concentration can be suppressed from progressing immediately throughout the device. Therefore, the reliability of the battery can be enhanced.

For example, the compound composed of Li, M1, and X may be the first component, and the compound composed of Li, M2, and X may be the second component. Alternatively, each of the first component and the second component is a compound composed of Li, M1, and X, and the compositions thereof may differ from each other. Alternatively, the first component and the second component may have the same composition, and the crystal structures may differ from each other.

The first melting point may be higher than the second melting point, and Compound B may contain the first component as a primary component. Herein, the primary component means a component contained at the greatest molar ratio. Consequently, a secondary component region having a low melting point selectively deteriorates at a time of heat generation during operation of the battery, and damage of the primary component is decreased. Therefore, the reliability of the battery can be enhanced.

The ionic conductivity of the first component is higher than the ionic conductivity of the second component, and Compound B may contain the first component as a primary component. Consequently, a halide having high ionic conductivity and having excellent heat resistance and environmental resistance is obtained.

### EXAMPLES

The present disclosure will be described below in more detail with reference to Examples.

Halide materials of Sample 1-1 to Sample 8 were produced. Sample 1-1 to Sample 2 correspond to Comparative examples, and a material subjected to the mechanochemical treatment in the mechanochemical step did not contain the first compound. Sample 3 to Sample 8 correspond to Examples, and a material mixture containing the first compound and the second compound was subjected to the mechanochemical treatment in the mechanochemical step. The producing methods performed in the present Examples will be described below in detail.

### <Sample 1-1>

### (Preparation step)

Initially, high-purity powders of LiF, TiF₄, and AlF₃ were prepared as raw materials. These raw material powders were weighed at a molar ratio of LiF:TiF₄:AlF₃ = 2.7:0.3:0.7 in air having a temperature of 22°C to 26°C and a humidity of about 30% to 50%.

The prepared raw material powders were homogeneously mixed for about 30 minutes by using an alumina porcelain mortar and a pestle.

### (Mechanochemical step)

The mixed raw material powder and the zirconia ball having a diameter of 15 mm (about 1,000 g) were placed in a 1-L circular-cylindrical ball mill container having a zirconia inner wall and subjected to ball mill treatment at a rotational speed of 60 rpm to 80 rpm for 3 hours at room temperature. Thereafter, a treated powder and the zirconia ball were removed from the ball mill container, and the powder was separated from the zirconia ball by being passed through a mesh under no load. Accordingly, a halide material of Sample 1-1 was obtained.

### <Sample 1-2 to Sample 1-4>

A halide material of Sample 1-2 was obtained in the manner akin to that of Sample 1-1 except that the treatment time of the ball mill was set to be 7 hours.

A halide material of Sample 1-3 was obtained in the manner akin to that of Sample 1-1 except that the treatment time of the ball mill was set to be 12 hours.

A halide material of Sample 1-4 was obtained in the manner akin to that of Sample 1-1 except that the treatment time of the ball mill was set to be 40 hours.

### <Sample 2 to Sample 8>

### (Preparation step)

High-purity powders of LiF, TiF₄, and AlF₃ were prepared as raw materials and mixed in the manner akin to that of Sample 1.

The resulting raw material powder mixture (about 5 g) was placed into a high-purity (SSA-H) alumina sagger (diameter of 40 mm and height of 45 mm). Subsequently, to suppress the component from vaporizing due to heat treatment, a high-purity (SSA-H) alumina lid was placed so as to perform sealing.

To improve the temperature uniformity, the sagger including the raw material powder was placed in a central portion of a heat treatment furnace. The sagger was placed on three support columns (that is, tsuku) so that the heat of a heater (that is, radiant heat) and an inert gas reached the bottom surface of the sagger. The tsuku was formed of mullite and had small heat capacity due to having a porosity of about 20%. The dimensions of the tsuku were the length of 10 mm, the width of 11 mm, and the height of 10 mm.

The heat treatment furnace was sealed by shutting a door, a nitrogen gas was introduced from an inlet in the furnace bottom at 1 L/min to 3 L/min and discharged from an upper exhaust gas outlet in the ceiling, and flowing of the nitrogen gas was continued until the heat treatment was completed. Accordingly, since making the gas to flow from the furnace bottom to the ceiling enables dust in the furnace to be discharged while being carried on the convection even when an unnecessary vaporized component is generated, an impurity can be suppressed from mixing into the heat-treated sample. In addition, an alumina plate having a thickness of 3 mm was placed in the vicinity of the midpoint between the gas inlet and the sagger so that shielding is performed partly and the introduced gas did not directly hit the sagger. In this regard, the distance between the gas inlet and the sagger was about 10 cm. After the heat treatment temperature presented in Table 1 was maintained for 4 hours, cooling to room temperature was performed at about 100°C/h. In this regard, the heat treatment temperature was an actual temperature in the sagger.

The mass decrease rate after the heat treatment was about 0.1% by mass to 1.0% by mass, and vaporization was almost suppressed.

### (Mechanochemical step)

Thereafter, in air, a block body (about 5 g) of a heat-treated material in the sagger was roughly pulverized in advance by using an alumina porcelain mortar and a pestle so as to have an average particle diameter of about 10 µm. Subsequently, the roughly pulverized heat-treated material and the zirconia ball having a diameter of 15 mm (about 1,000 g) were placed in a 1-L circular-cylindrical ball mill container having a zirconia inner wall and subjected to ball mill treatment at a rotational speed of 60 rpm to 80 rpm for a time presented in Table 2 at room temperature. Thereafter, a treated powder and the zirconia ball were removed from the ball mill container, and the powder was separated from the zirconia ball by being passed through a mesh under no load.

The halide materials of Sample 2 to Sample 8 were produced by such a series of producing method.

### (Evaluation of sample)

Regarding each of the sample after the preparation step and the sample after the mechanochemical step, the composition, the crystal phase, and the ionic conductivity were evaluated. The evaluation results of the sample after the preparation step are presented in Table 1. The evaluation results of the sample after the mechanochemical step are presented in Table 2.

In the mechanochemical step, compounds presented in Table 1 were subjected to the mechanochemical treatment. Regarding Sample 3, Li₃AlF₆ corresponds to the first compound, and Li₂TiF₆ and TiF correspond to the second compound. Regarding Sample 4 to Sample 8, Li₃AlF₆ corresponds to the first compound, and Li₂TiF₆ corresponds to the second compound. Regarding Sample 1 to Sample 2, the first compound was not contained in the sample after the preparation step, that is, in the material mixture subjected to the mechanochemical treatment.

The composition was evaluated on the basis of the inductively coupled plasma (ICP) emission spectroscopy by using an inductively coupled plasma emission spectroscope (iCAP7400 produced by ThermoFisher Scientific).

Regarding the evaluation of the crystal phase, initially, coarse particles of the resulting sample were uniformly pulverized by using an alumina mortar. For example, pulverization was performed until the powder had an average particle diameter of less than or equal to 3 µm. Thereafter, the crystal phase was evaluated on the basis of powder X-ray diffraction. An X-ray diffraction apparatus (MiniFlex600 produced by RIGAKU) was used for the measurement. Cu-Kα rays (wavelength of 1.5405 Å and 1.5444 Å) were used as the X-ray source.

In Table 1 and Table 2, the order of the crystal phases described in the line of Crystal phase is in descending order of the peak intensity when the most intense peak of each crystal phase on the X-ray diffraction pattern obtained by X-ray diffraction measurement was compared. The phase described on the far left is taken as a primary component in the material.

Regarding the ionic conductivity, a powder sample was placed in a metal mold (diameter of 10 mm), and a pressure of about 3 t/cm was applied by using a uniaxial hydraulic press. The ionic conductivity was calculated from the area, the thickness, and the impedance characteristics at room temperature of the resulting green compact sample.

The impedance was measured under application of pressure at room temperature. In this regard, the impedance was measured under the measurement frequency of 10 Hz to 10 MHz, the measurement voltage of 1 Vrms, and no DC bias, and the evaluation was performed where the shift of the electrical length of a cable and a measurement jig was offset.

**[Table 1]**

| Sample | Preparation step | | |
|---|---|---|---|
| | Heat treatment temperature | Crystal phase | Ionic conductivity σ (µS/cm) |
| 1 | - | AlF₃, TiF₄, LiF | measurement was impossible |
| 2 | 500°C | AlF₃, TiF₄, LiF | measurement was impossible |
| 3 | 550°C | Li₃AlF₆, Li2TiF₆, AlF₃, TiF₄ | 0.6 |
| 4 | 600°C | Li₃AlF₆, Li₂TiF₆ | 1.2 |
| 5 | 650°C | Li₃AlF₆, Li₂TiF₆ | 1.5 |
| 6 | 700°C | Li₃AlF₆, Li₂TiF₆ | 1.4 |
| 7 | 750°C | Li₃AlF₆, Li₂TiF₆ | 1.4 |
| 8 | 800°C | Li₃AlF₆, Li₂TiF₆ | 1.3 |

**[Table 2]**

| Sample | Mechanochemical step | | |
|---|---|---|---|
| | Ball milling time (hour) | Crystal phase | Ionic conductivity σ (µS/cm) |
| 1-1 | 3 | LiF, AlF₃, TiF₄, Li_{2.7}Ti_{0.3}l_{0.7}F₆ | 0.2 |
| 1-2 | 7 | LiF, AlF₃, TiF₄, Li_{2.7}Ti_{0.3}l_{0.7}F₆ | 0.5 |
| 1-3 | 12 | Li_{2.7}Ti_{0.3}Al_{0.7}F₆, LiF, AlF₃, TiF₄ | 0.8 |
| 1-4 | 40 | Li_{2.7}Ti_{0.3}Al_{0.7}F₆, LiF, AlF₃, TiF₄ | 0.9 |
| 2 | 7 | Li_{2.7}Ti_{0.3}Al_{0.7}F₆, AlF₃, Li₃AlF₆, Li₂TiF₆ | 0.6 |
| 3 | 7 | Li_{2.7}Ti_{0.3}Al_{0.7}F₆, Li₃AlF₆, Li₂TiF₆ | 2.1 |
| 4 | 7 | Li_{2.7}Ti_{0.3}Al_{0.7}F₆, Li₃AlF₆, Li₂TiF₆ | 27 |
| 5-1 | 3 | Li_{2.7}Ti_{0.3}Al_{0.7}F₆, Li₃AlF₆, Li₂TiF₆ | 2.6 |
| 5-2 | 7 | Li_{2.7}Ti_{0.3}Al_{0.7}F₆, Li₃AlF₆, Li₂TiF₆ | 4.8 |
| 5-3 | 12 | Li_{2.7}Ti_{0.3}Al_{0.7}F₆ | 7.9 |
| 6 | 7 | Li_{2.7}Ti_{0.3}Al_{0.7}F₆, Li₃AlF₆, Li₂TiF₆ | 4.6 |
| 7 | 7 | Li_{2.7}Ti_{0.3}Al_{0.7}F₆, Li₃AlF₆, Li₂TiF₆ | 4.5 |
| 8 | 7 | Li_{2.7}Ti_{0.3}Al_{0.7}F₆, Li₃AlF₆, Li₂TiF₆ | 4.4 |

### (Consideration)

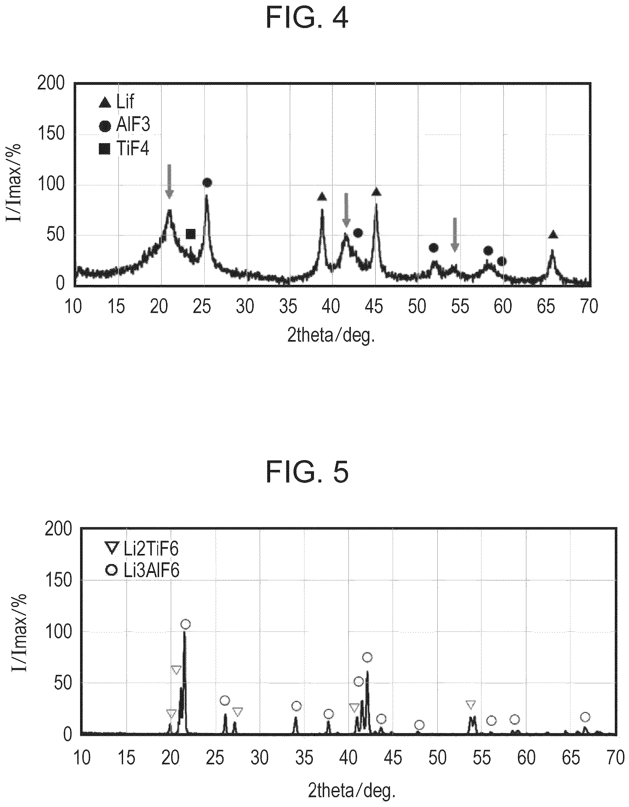

When a mixture of LiF, AlF₃, and TiF₄ was subjected to the mechanochemical treatment in the mechanochemical step as indicated by Sample 1-1 to Sample 1-4, the ionic conductivity was less than 1 µS/cm and was low. Even when the ball mill treatment time was set to be 40 hours, the ionic conductivity of the resulting halide material was low. The reason for this is conjectured that a large amount of raw material having very low electrical conductivity remains so as to hinder an electric conduction path of a halide particle. In this regard, the ionic conductivity of the raw material is less than or equal to 1 × 10⁻⁹ S/cm. Fig. 3 is a graph illustrating an X-ray diffraction pattern of Sample 1 after the preparation step and before the mechanochemical step. Fig. 4 is a graph illustrating an X-ray diffraction pattern of Sample 1-4 after the mechanochemical step. In Fig. 4, arrows indicate peaks of Li_{2.7}Ti_{0.3}Al_{0.7}F₆. In this regard, even when the mixture of LiF, AlF₃, and TiF₄ was subjected to the mechanochemical treatment for greater than or equal to 100 hours, a large amount of remaining raw material. Sample 2 to Sample 5-2 and Sample 6 to Sample 8 also contained Li₃AlF₆ and Li₂TiF₆. That is, Sample 2 to Sample 5-2 and Sample 6 to Sample 8 contained a compound B containing Li₃AlF₆ as a first component and Li₂TiF₆ as a second component. Herein, the melting point of Li₃AlF₆ is about 800°C to 900°C, and the melting point of Li₂TiF₆ is about 700°C to 800°C. In this regard, the ionic conductivity of each of Li₃AlF₆ and Li₂TiF₆ is about 1 × 10⁻¹⁰ S/cm to 1 × 10⁻⁹ S/cm.

The ionic conductivity of the halide material of Sample 2 was 0.6 µS/cm. On the other hand, the ionic conductivity of the halide materials of Sample 3 to Sample 8 was 2.1 µS/cm and was higher than that of Sample 1 to Sample 2. Accordingly, the material mixture containing the first compound that is a complex cationic halide having electrical conductivity being subjected to the mechanochemical treatment enables a high ionic conductivity halide material to be produced in a short time. Regarding all Samples, the halide materials obtained after mechanochemical step contained a compound having a composition denoted by Li_{2.7}Ti_{0.3}Al_{0.7}F₆.

Regarding Sample 3 to Sample 8, Li₃AlF₆ serving as the first compound that is a crystalline complex cationic halide having ionic conductivity was synthesized in the preparation step. Specifically, a heat-treated material mainly containing crystalline Li₃AlF₆ was obtained. In this regard, the heat-treated material also contained crystalline Li₂TiF₆. Fig. 5 is a graph illustrating an X-ray diffraction pattern of Sample 5 after the preparation step. On the other hand, regarding Sample 2, the first compound was not synthesized in the preparation step.

As indicated by Sample 2, when the heat treatment temperature in the preparation step was 500°C, since the raw material did not cause a solid phase reaction, the mechanochemical step was performed in a state in which the first compound was not synthesized, and high ionic conductivity of the halide material was not realized. On the other hand, as indicated by Sample 3, when the heat treatment temperature was 550°C, it was ascertained that a small amount of AlF₃ serving as the raw material remained after the preparation step. Accordingly, it was found that the material mixture subjected to the mechanochemical treatment may contain the raw material that is a single cationic halide provided that the first compound that is a complex cationic halide is contained. Regarding Sample 3, it is conjectured that the electrical conductivity was further improved since some extent of ionic conductivity (0.6 µS/cm) was exhibited after the preparation step and, subsequently, a phase of Li_{2.7}Ti_{0.3}Al_{0.7}F₆ (hereafter referred to as "LTAF phase") instead of a Li₃AlF₆ phase and a Li₂TiF₆ phase was formed as a primary component by the mechanochemical treatment in the mechanochemical step. In such an instance, a Li₃AlF₆ phase and a Li₂TiF₆ phase in addition to the LTAF phase serving as the primary component were also detected.

Transition of the Li₃AlF₆ phase generated by the solid phase reaction due to the heat treatment in the preparation step to the LTAF phase progresses by the mechanochemical step. On the other hand, it is conjectured that a portion of remaining raw material that is a single cationic halide was precipitated as Li₃AlF₆ after the mechanochemical step. A small amount of AlF₃ ascertained by X-ray diffraction measurement after the preparation step was disappeared after the mechanochemical step.

Accordingly, a small amount of Li₃AlF₆ and Li₂TiF₆ present together after the mechanochemical step do not greatly decrease the ionic conductivity in contrast to the raw material that is the single cationic halide having very low ionic conductivity.

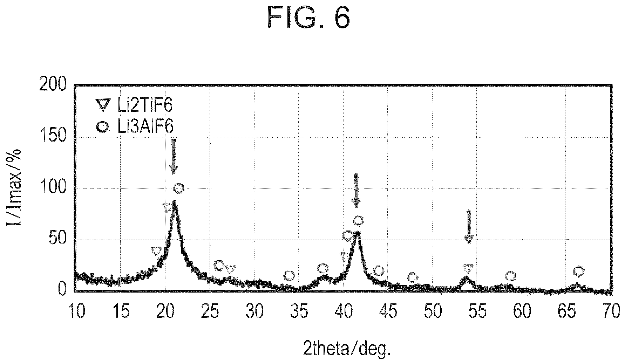

Fig. 6 is a graph illustrating an X-ray diffraction pattern of Sample 5-2 after the mechanochemical step. In Fig. 6, arrows indicate peaks of LTAF. As is clear from Fig. 6, the halide material of Sample 5-2 has an LTAF phase as a primary component phase, and the amount of Li₃AlF₆ is smaller than the amount of LTAF. In the X-ray diffraction measurement after the mechanochemical step, the LTAF phase appeared instead of diffraction patterns of the two phases of Li₃AlF₆ and Li₂TiF₆ exhibited very broad characteristic peaks. Specifically, a broad most intense peak (half width of about 3° to 8°) located in a range of diffraction angle 2θ of about 21° to 22°, a peak (half width of about 3° to 6°) having intensity about 40% to 60% the intensity of the most intense peak and being located in a range of diffraction angle 2θ of about 41° to 42°, and a peak (half width of about 2° to 4°) having intensity about 10% to 20% the intensity of the most intense peak and being located at a diffraction angle 2θ of about 53° to 54° were observed. Since the half width of the peak is large, the reflection spacing that contributes to diffraction has wide spacing distribution (spacing variously changes) corresponding to the peak width. Therefore, it is conjectured that the LTAF phase of the halide material of Sample 5-2 mainly contains a component having a disrupted atomic arrangement and low Li restrictiveness, that is, a distorted crystal or an amorphous material. It is conjectured that since a distorted crystal or an amorphous material is formed by external stress, formation progresses from the particle surface to the interior due to repetition of impact. Therefore, it is conjectured that the particle surface has most disrupted crystallinity or amorphousness and disruption of crystallinity decreases with increasing depth in the particle.

As indicated by Sample 4 to Sample 8, when the heat treatment temperature in the preparation step was 600°C to 800°C, the raw material did not remain after the preparation step, and Li₃AlF₆ and Li₂TiF₆ were synthesized. Subsequently, LTAF converted to an amorphous material was formed as a primary component after the mechanochemical step, and high ionic conductivity was exhibited. In this regard, in Samples excluding Sample 5-3, a small amount of Li₃AlF₆ was also ascertained after the mechanochemical step, as in Sample 3.

Regarding Sample 5-2 to Sample 8, the ionic conductivity of the heat-treated material obtained after the preparation step was high compared with Sample 3 and Sample 4. Consequently, it was ascertained that when the heat treatment temperature in the preparation step is higher than or equal to 650°C, a halide having higher ionic conductivity can be produced. In this regard, the raw material was not detected by the X-ray diffraction measurement of Sample 4 after the preparation step, but it is conjectured that a small amount less than or equal to the detection limit of raw material was present. Accordingly, when the single cationic halide in the material mixture subjected to the mechanochemical treatment in the mechanochemical step is less than or equal to the detection limit of the X-ray diffraction measurement, a halide having higher ionic conductivity is obtained, and when the material mixture contains no single cationic halide, a halide having still higher ionic conductivity is obtained.

As indicated by Sample 5-1, Sample 5-2, and Sample 5-3, it was observed that the electrical conductivity tended to be increased with increasing ball mill treatment time in the mechanochemical step. In addition, regarding Sample 5-3, Li₃AlF₆ was not ascertained after the mechanochemical step, and a single phase of Li_{2.7}Ti_{0.3}Al_{0.7}F₆ resulted. Consequently, Li₃AlF₆ after the mechanochemical step decreased with increasing mechanochemical treatment time. From this result, it is conjectured that Li₃AlF₆ was changed to and taken into a LTAF phase by the mechanochemical treatment due to the ball mill treatment time being increased. Accordingly, the electrical conductivity of the resulting halide can be improved in accordance with the extent of the mechanochemical treatment in the mechanochemical step, and the treatment time can be reduced in accordance with the required electrical conductivity.

Regarding Sample 8, the heat treatment temperature in the preparation step was 800°C, and the specimen was dissolved. It was ascertained that a halide material having high ionic conductivity is also obtained in a short time by subjecting a melt crystal (synthesized material having a Li₃AlF₆ and Li₂TiF₆ structure) to the mechanochemical step.

As described above, a halide material having high ionic conductivity could be synthesized in a short time by preparing the first compound that was complex cationic halide (crystal of Li₃AlF₆ in the present example) and applying the mechanochemical treatment to the first compound and the second compound together in the mechanochemical step. The resulting halide has excellent reliability of a bonding interface and may have, for example, excellent stability in air.

The producing method and the halide according to the present disclosure have been described above with reference to the embodiments, but the present disclosure is not limited to these embodiments. The embodiments including various modifications conceived by a person skilled in the art and other embodiments constructed by combining some constituent elements of the embodiments are included in the scope of the present disclosure without departing from the spirit of the present disclosure.

### Industrial Applicability

The producing method according to the present disclosure may be utilized as a method for producing a solid electrolyte. In addition, the halide material according to the present disclosure may be utilized as, for example, a solid electrolyte of secondary batteries such as all-solid batteries used for various electronic apparatuses or automobiles.

## Claims

1. A halide material producing method comprising:
(A) subjecting a material mixture containing a first compound containing Li, M1, and X1 and a second compound containing M2 to mechanochemical treatment,
wherein each of M1 and M2 represents one type of element selected from a metal element and a metalloid element, and
X1 represents at least one selected from the group consisting of F, Cl, Br, and I.

2. The producing method according to claim 1,
wherein the first compound is a particle.

3. The producing method according to claim 1,
wherein the material mixture is subjected to the mechanochemical treatment by using a ball mill in (A) above.

4. The producing method according to claim 1,
wherein the first compound has a crystal phase.

5. The producing method according to claim 1,
wherein M1 represents Al or Ti.

6. The producing method according to claim 1,
wherein X1 contains F.

7. The producing method according to claim 1,
wherein the first compound is denoted by a formula: Li_{6-ab}M1_{b}X1₆ (where a represents a valence of M1, and 0 < b ≤ 1.5 is satisfied).

8. The producing method according to claim 1,
wherein M2 represents Al or Ti.

9. The producing method according to claim 1,
wherein the second compound further contains X2,
where X2 represents at least one selected from the group consisting of F, Cl, Br, and I.

10. The producing method according to claim 1, further comprising:
(B) synthesizing the first compound,
wherein (B) above is performed before (A) above.

11. The producing method according to claim 10,
wherein the first compound is synthesized by heat-treating a raw material mixture in (B) above.

12. The producing method according to claim 10,
wherein the first compound is synthesized by subjecting a raw material to the mechanochemical treatment in (B) above.

13. A halide material comprising:
Compound A composed of Li, M1, M2, and X,
wherein each of M1 and M2 represents one type of element selected from a metal element and a metalloid element,
X represents at least one selected from the group consisting of F, Cl, Br, and I, and
Compound A above has an amorphous phase.

14. The halide material according to claim 13,
wherein neither LiX nor M1Xₘ nor M2Xₙ is substantially contained,
where m represents a valence of M1, and n represents a valence of M2.

15. The halide material according to claim 13, further comprising:
Compound B containing a compound composed of Li, M1, and X.

16. The halide material according to claim 15,
wherein Compound B above contains
a first component having a first melting point and a second component having a second melting point different from the first melting point.

17. The halide material according to claim 16,
wherein the first melting point is higher than the second melting point, and
Compound B above contains the first component as a primary component.

18. The halide material according to claim 16,
wherein ionic conductivity of the first component is higher than ionic conductivity of the second component, and
Compound B above contains the first component as a primary component.
